# EUROPEAN PATENT SPECIFICATION

(11) **EP 2 381 131 B1**
(45) Date of publication and mention of the grant of the patent: **26.12.2012**
(21) Application number: 10161046.7
(22) Date of filing: 26.04.2010
(51) Int. Cl.: F16H 7/08, F16H 7/12

(54) **Hydraulic auto-tensioner and belt transmission device**
Hydraulischer Selbstspanner und Riemenübertragungsvorrichtung
Tendeur automatique hydraulique et dispositif à transmission par courroie

(30) Priority: 20.04.2010 JP 2010097095
(43) Date of publication of application: 26.10.2011
(73) Proprietor: NTN Corporation, Osaka-shi, Osaka (JP)
(72) Inventor: Goto, Shiro, Iwata-shi Shizuoka (JP)
(74) Representative: Grünecker, Kinkeldey, Stockmair & Schwanhäusser

(56) References cited:
- EP-A1- 1 710 472
- EP-A2- 0 212 119
- JP-A- 2005 265 039
- US-A- 4 986 796

## Description

### TECHNICAL FIELD

This invention relates to a hydraulic auto-tensioner to adjust tension of a belt for driving engine accessories such as a compressor of an air-conditioner and a water pump, and to a belt transmission device using the hydraulic auto-tensioner.

### BACKGROUND ART

A typical belt transmission device for driving automotive engine accessories such as a compressor of an air-conditioner and water pumps includes a pulley mounted to the engine crankshaft, a pulley mounted to a rotary shaft of an alternator, pulleys mounted to rotary shafts of respective engine accessories, and an engine accessory belt trained around these pulleys so that the rotation of the crankshaft is transmitted to the engine accessories.

In such a belt transmission device, in order to absorb any change in distance between axes of pulleys due to thermal expansion of the engine, or to absorb elongation of the engine accessory belt due to prolonged period of use, a tension pulley is in contact with the engine belt at its slack side when the engine is driven, and an adjusting force of an auto-tensioner is applied to a pulley arm pivotably supporting the tension pulley so as to keep the tension of the belt constant.

The auto-tensioner described in Patent Document 1 is known as an above-mentioned auto-tensioner. This hydraulic auto-tensioner comprises a cylinder containing hydraulic oil therein, a rod inserted in the cylinder, a plunger provided at the bottom end of the rod, the plunger being slidably fit in the inner diameter face of the cylinder, defining a leak gap therebetween, the plunger defining a pressure chamber therebelow and a reservoir chamber thereabove, the plunger being formed with a path through which said pressure chamber communicates with said reservoir chamber, the path being provided with a check valve that closes the path when the pressure in the pressure chamber exceeds the pressure in the reservoir chamber, and a return spring provided outside the cylinder and biasing the cylinder and the rod in an extending direction.

In a hydraulic auto-tensioner with such a configuration, when tension of the belt for driving engine accessories increases and the pushing-in force is applied from the belt through the tension pulley and the pulley arm, making the pressure in the pressure chamber exceed the pressure in the reservoir chamber, the check valve closes the path and hydraulic oil flows into the reservoir chamber through the leak gap, thereby making the cylinder and the rod retract to the position where load of the return spring becomes equal to the pushing-in force. At this time, the pushing-in force is buffered by hydraulic damping caused by viscous resistance of the hydraulic oil passing through the leak gap.

On the other hand, when the tension of the belt decreases and force is applied in the direction to expand the cylinder and the rod, hydraulic oil in the reservoir chamber flows into the pressure chamber through the path and the cylinder and the rod moves relatively to each other in extending direction, thereby absorbing slackness of the belt. This hydraulic auto-tensioner thus keeps the tension of the belt constant.

An idling-stop vehicle is known which carries, as an alternator driven through the above-described belt transmission device, a motor generator having both the functions of a motor and a generator. In such an idling stop vehicle, the motor generator is switched to power-generating mode so as to rotate the drive wheels by the engine and drive engine accessories such as the motor generator and the compressor of air-conditioner described above during normal running, and the engine is stopped and the motor generator is switched to actuating mode so as to drive engine accessories when the vehicle is at a stop. The engine is driven by the motor generator when restarting after idling stop.

In such an idling stop vehicle, the engine accessory belt is driven by a different pulley when restarting the engine after idling stop from a pulley that drives the belt during normal travel. This means that the portion of the engine accessory belt that is a slack side during normal travel becomes a tight side when the engine is restarted after idling stop. Thus, if the auto-tensioner disclosed in Patent Document 1 is used in the belt transmission device mounted in such an idling stop vehicle, when the engine is restarted, the cylinder and the rod of the auto-tensioner tend to be excessively retracted, thus causing excessive displacement of the tension pulley. Consequently the entire belt slackens and slip occurs between the belt and the tension pulley, which may cause unstable start of the engine.

In order to prevent excessive retraction of the cylinder and the rod when the engine is restarted after idling stop, Patent Documents 2 and 3 propose auto-tensioners in which the relative movement between the cylinder and the rod is temporarily stopped by energizing a solenoid.
Patent Document 1: JP 2005-214232A
Patent Document 2: JP 2005-090724A
Patent Document 1: JP 2007-016932A

### DISCLOSURE OF THE INVENTION

### OBJECT OF THE INVENTION

The auto-tensioners of Patent Documents 2 and 3 include, instead of a leak gap as mentioned above, a passage for communicating the pressure chamber with the reservoir chamber through the interior of the rod, and an orifice for restricting the flow rate of hydraulic oil through this passage. In this passage are provided a check valve that allows only a flow of hydraulic oil from the pressure chamber into the reservoir chamber and a solenoid that can hold the check valve in the closed position. By holding the check valve in the closed position with the solenoid, it is possible to temporarily stop the cylinder and the rod from retracting relative to each other.

But with such auto-tensioners, in which the relative movement between the cylinder and the rod is temporarily stopped by energizing the solenoid, it is necessary to form the passage extending through the rod and mount the solenoid, they tend to be completed in structure and their manufacturing cost tends to be high.

The document EP 1 710 472 A according to the preamble of claim 1 discloses an auto-tensioner for use in a vehicle comprising a cylinder, a rod and a plunger movably disposed in the cylinder and defining a pressure chamber therebelow and a reservoir chamber thereabove. A sleeve is disposed between the plunger and the cylinder. Said plunger includes a passage communicating with the pressure chamber and the reservoir chamber. A check valve closes said passage when the pressure in the pressure chamber exceeds the pressure in the reservoir chamber. Minute gaps are formed between the sliding surfaces of the sleeve and the plunger.

In EP 212 119 A a tensioner for toothed drive belts is disclosed, wherein said tensioner has a leak-down time with at least 0.5 minutes per millimeter.

### MEANS TO ACHIEVE THE OBJECT

Under these circumstances, the inventor of the present invention thought of using the viscous resistance of hydraulic oil that flows through the leak gap to support temporary excessive tension applied when the engine is started, thereby preventing excessive retraction of the cylinder and the rod when the engine is restarted after idling stop. Based on this thought, the inventor prepared many auto-tensioners having different leak gaps from each other, mounted each of them on an idling stop vehicle and its engine was restarted. As a result, the inventor discovered that an auto-tensioner having a leak gap that satisfies specific requirements allows smooth restart of the engine of an idling stop vehicle.

Specifically, the inventor discovered that if the leak gap is sized such that the leak down time is 0.65 seconds/mm or over when a load of 980 N is applied to the plunger, it is possible to prevent excessive retraction of cylinder and the rod when the engine of an idling stop vehicle is restarted, thereby permitting stable start of the engine.

The leak down time is the time period necessary for the plunger to be pushed into the cylinder by 1 mm with a constant load being applied to the plunger. The longer the leak down time, the longer it takes the plunger to be pushed into the cylinder and thus the higher the damper load.

The auto-tensioner disclosed in Patent Document 1, which is commonly owned by the applicant of the present invention, is one used in an ordinary vehicle, in which the engine accessory belt is always driven by a single pulley only, and is not intended for use in an idling stop vehicle, in which the engine accessory belt is driven by a different pulley when the engine is restarted after idling stop from a pulley for driving the belt during normal travel. In this auto-tensioner for use in an ordinary vehicle, the leak down time when a load of 980 N is applied to the plunger is about 0,1 to 0.3 seconds/mm. This value indicates that the leak gap of this auto-tensioner is larger than the leak gap of the auto-tensioner according to this invention. This value is determined, in view of the fact that the engine accessory belt tends to shrink and expand to a larger degree than the timing belt for driving camshafts, to reduce the damper load.

The auto-tensioners disclosed in Patent Documents 2 and 3 are intended for use in an idling stop vehicle. But in these auto-tensioners, because the passage extending through the rod and the solenoid are added as means for preventing excessive retraction of the cylinder and the rod when the engine is restarted, they lack the concept of using the viscous resistance of hydraulic oil that flows through the leak gap as means for preventing excessive retraction of the cylinder and the rod.

It is the inventor of this invention who first discovered that the viscous resistance of hydraulic oil that flows through the leak gap can be used to prevent to prevent excessive retraction of the cylinder and the rod when the engine of an idling stop vehicle is restarted after idling stop. Based on this discovery, the inventor identified the specific requirements for the leak gap to achieve this object.

The return spring is preferably provided outside the cylinder. With this arrangement, it is possible to ensure sufficiently large wire diameter and coil inner diameter of the return spring, thus ensuring a large load of the return spring. This in turn makes it possible to effectively reduce retraction of the cylinder and the rod when the engine is restarted.

The upper limit of the leak down time is preferably set to be not longer than 10 s/mm. If the leak down time is longer than this, displacement of the cylinder and the rod in retracting direction becomes extremely slow compared to that in extending direction, thereby causing pump-up.

A steel sleeve may be inserted in the cylinder so that the leak gap is defined between the inner diameter face of the sleeve and the plunger. With this configuration, wear of the cylinder due to sliding of the plunger is prevented by the sleeve. This makes it possible to form the cylinder with an aluminum alloy to save weight. Also, since the sleeve is made of steel, the sleeve itself is less likely to become worn, and change of leak gap size is thereby reduced.

The above-mentioned hydraulic auto-tensioner can be applied to a belt transmission device for an idling stop vehicle in which the engine is stopped when the vehicle stops and restarted by a motor generator after idling stop.

With this configuration, the cylinder and the rod do not retract excessively even if a high belt tension momentarily acts on the hydraulic auto-tensioner when restarting the engine by a motor generator. This keeps change of the tension pulley position small, thus preventing slip on the belt. The engine can thus be started stably.

In the above-mentioned belt transmission device, the engine can be made compact if the outer diameter of the return spring of the hydraulic auto-tensioner is within the axial width of a boss mounted on a pivot shaft of the pulley arm.

The engine can further be made compact if the above-mentioned boss of the pulley arm is positioned so that a side face of the boss on the side remote from the engine is flush with a side edge of the belt on the side remote from the engine or located close to the engine block than is the side edge of the belt.

### EFFECT OF THE INVENTION

With the hydraulic auto-tensioner according to the present invention, which is intended for use in an idling stop vehicle, since the leak gap is determined such that the leak down time when a load of 980 N is applied to the plunger is 0.65 seconds/mm or over, it is possible to prevent slip of the belt as a result excessive retraction of the cylinder and the rod when the engine is restarted after idling stop. Also, since it is not necessary to form a passage extending through the rod or mount a solenoid, the entire auto-tensioner is simple in structure and can be manufactured at a low cost.

### BRIEF DESCRIPTION OF THE DRAWINGS

Fig. 1 is a front view of a belt transmission device adopting the hydraulic auto-tensioner of the present invention;
Fig. 2 is an enlarged front view of the hydraulic auto-tensioner and its periphery in the belt transmission device of Fig. 1;
Fig. 3 is a sectional view taken along the line III-III of Fig. 2;
Fig. 4 is a graph showing relationship between the leak down time and the displacement of the rod in pushing-in direction;
Fig. 5 is a side view of the hydraulic auto-tensioner and its periphery in the belt transmission device of Fig. 2; and
Fig. 6 is a graph showing the relationship between the belt tension and the time elapsed and the relationship between the displacement of the rod and the time elapsed, when a sample whose leak down time is 3.2 seconds/mm is mounted in a belt transmission device of an idling stop vehicle and its engine is started; and
Fig. 7 is a graph showing the relationship between the belt tension and the time elapsed and the relationship between the displacement of the rod and the time elapsed, when a sample whose leak down time is 0.26 seconds/mm is mounted in a belt transmission device of an idling stop vehicle and its engine is started.

### BEST MODE FOR EMBODYING THE INVENTION

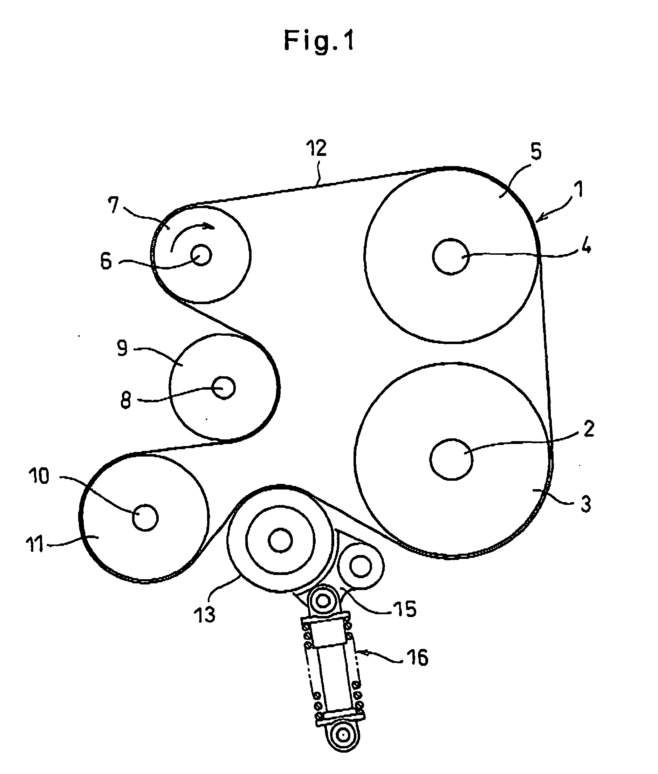

The embodiment of the present invention is now described with reference to the drawings. Fig. 1 shows a belt transmission device for an idling stop vehicle in which drive wheels are driven by an engine during normal running and the engine is stopped when the vehicle stops and restarted by a motor generator after idling stop.

In this belt transmission device 1, a belt 12 is trained around a pulley 3 attached to a crankshaft 2 of an engine, a pulley 5 attached to a rotation shaft 4 of a water pump, a pulley 7 attached to a rotation shaft 6 of a motor generator, an idler pulley 9 attached to a fixed shaft 8, and a pulley 11 attached to a rotation shaft 10 of a compressor of an air-conditioner. The motor generator is switched to a power generation mode by driving of the engine and, when the vehicle is stopped, the motor generator drives engine accessories such as the water pump and the air-conditioner.

A tension pulley 13 is in contact with a portion of the belt 12 which becomes a slack side during driving of the engine. Specifically, the tension pulley 13 is in contact with the portion of the belt 12 downstream of the pulley 3 of the crankshaft 2 and upstream of the pulley 7 of the motor generator. This portion of the belt 12, where the tension pulley 13 contacts, is a slack side during normal travel. But when the engine is started, this portion becomes a tight side because the pulley 7 of the motor generator now acts as a drive shaft.

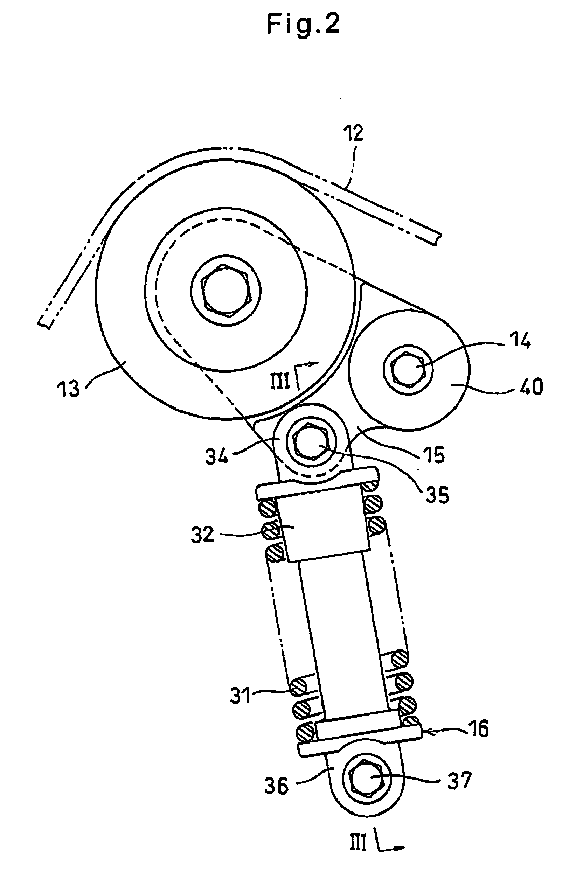

As shown in Fig. 2, the tension pulley 13 is rotatably supported by a pulley arm 15 which is pivotably supported around a pivot shaft 14. Adjusting force of a hydraulic auto-tensioner 16 embodying the present invention is applied to the pulley arm 15, which makes the tension pulley 13 pushed against the belt 12.

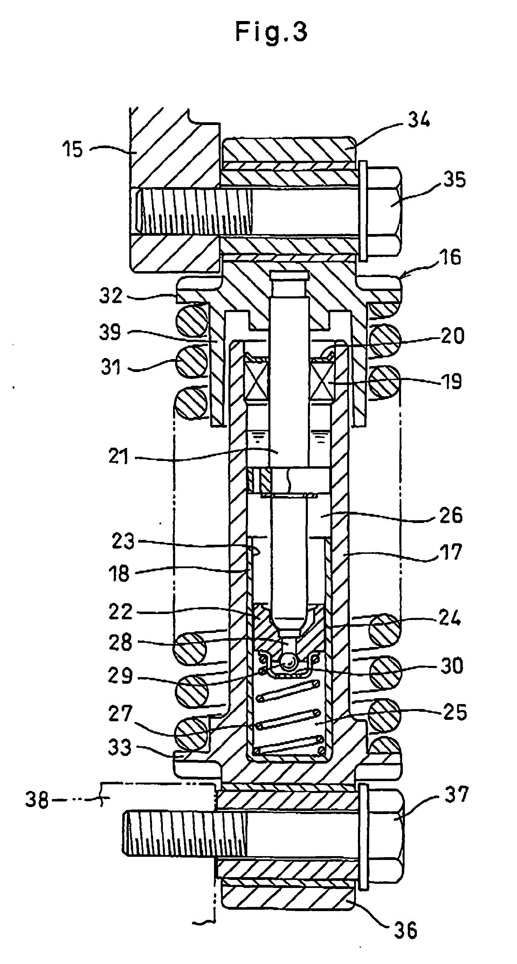

The hydraulic auto-tensioner 16 includes, as shown in Fig. 3, a cylindrical cylinder 17 with an open top end and a closed bottom end. The cylinder 17 is made of an aluminum alloy. Inside the cylinder 17, a steel cylindrical sleeve 18 having open and closed ends is mounted and fixed. Also hydraulic oil is filled in the cylinder 17. An oil seal 19 is mounted on the inner circumference of the cylinder 17 near its top end to prevent leakage of hydraulic oil. A rose snap ring 20 prevents the oil seal 19 from coming off.

A rod 21 is inserted in the cylinder 17, slidably extending through the rose snap ring 20 and the oil seal 19. A hydraulic damper is mounted in the rod 21, buffering pushing-in force applied to the rod 21.

At the bottom end of the rod 21, a plunger 22 is provided, fit in the sleeve 18 so as to be slidable along its inner diameter face 23. A minute leak gap 24 is formed between the plunger 22 and the inner diameter face 23 of the sleeve 18.

By the plunger 22 mounted in the sleeve 18, the inner space of the cylinder 17 is separated into a pressure chamber 25 and a reservoir chamber 26. In the pressure chamber 25, defined under the plunger 22, a plunger spring 27 is mounted, pressing the plunger 22 against the bottom end of the rod 21.

In the plunger 22, a path 28 is formed, communicating the pressure chamber 25 with the reservoir chamber 26. At the opening of the path 28 to the pressure chamber 25, a check valve is provided. The check valve comprises a check ball 29 that closes the path 28 when pushed-in force is applied to the rod 21 and the pressure in the pressure chamber 25 exceeds the pressure in the reservoir chamber 26, and a retainer 30 limiting axial movement range of the check ball 29. The retainer 30 is pressed against the bottom face of the plunger 22 by the elastic force of the plunger spring 27.

On the outside of the cylinder 17, a return spring 31 is mounted between a spring seat 32 mounted on the top end of the rod 21 protruding from the cylinder 17 and a flange 33 provided on the outer circumference of the cylinder 17 at its bottom end portion, biasing the cylinder 17 and the rod 21 in the extending direction. By being mounted on the outside of the cylinder 17, it is possible to ensure sufficiently large wire diameter and coil inner diameter of the return spring 31, thus ensuring a large load of the return spring 31, compared to the arrangement in which the return spring is mounted in the cylinder 17.

A connecting portion 34 is formed integrally with the spring seat 32, pivotably connected to the pulley arm 15 through a bolt 35. Also, a connecting portion 36 is formed integrally with the bottom end of the cylinder 17, pivotably connected to an engine block 38 through a bolt 37. On the bottom face of the spring seat 32, a cylindrical dust cover 39 is integrally formed, covering the top opening of the cylinder 17.

The size of the leak gap 24 between the plunger 22 and the inner diameter face 23 of the sleeve 18 is determined such that the leak down time when a load of 980 N is applied to the plunger is 0.65 seconds/mm or over and 10 seconds/mm or under. The leak down time is the time period necessary for the plunger 22 to be pushed into the cylinder 17 by 1 mm with a constant load being applied to the plunger 22. The longer the leak down time, the longer it takes the plunger 22 to be pushed into the cylinder 17 and thus the higher the damper load.

The leak down time can be measured as follows: That is, a load equal to the sum of the spring load of the return spring 31 when the spring seat 32 is at a reference position (such as the position where the plunger 22 is at the center of stroke) and a load of 980 N is applied to the spring seat 32, and the time necessary for the spring seat 32 to move from a point 0.5 mm from the reference position in one axial direction to a point 0.5 mm from the reference position in the opposite axial direction is measured as the leak down time.

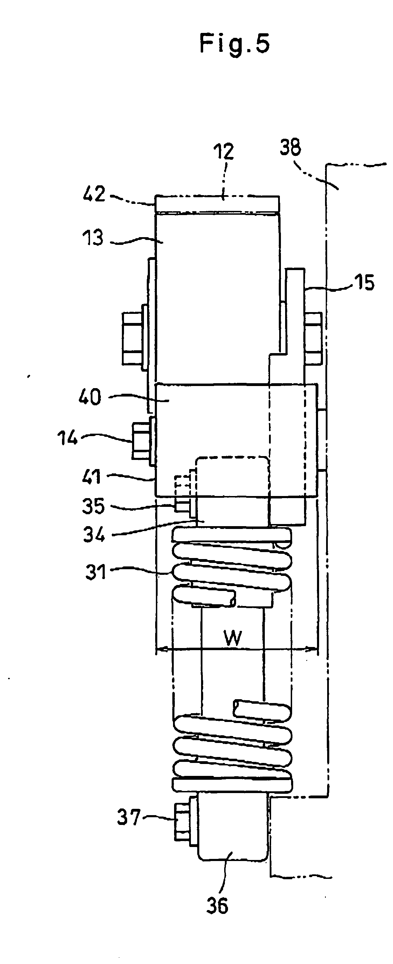

As shown in Fig. 5, the outer diameter of the return spring 31 is within the axial width W of a boss 40 provided on the pivot shaft 14 of the pulley arm 15. The boss 40 is positioned so that its side face 41 on the side remote from the engine block 38 is flush with the side edge 42 of the belt 12 on the side remote from the engine block 38, which makes the engine compact. Alternatively, the side face 41 of the boss 40 may be located close to the engine block 38 than is the side edge 42 of the belt 12.

In the belt transmission device 1 configured as described above, tension of the belt 12 varies according to factors such as loads of the engine accessories driven by the belt 12 and angular speed of the crankshaft during operation of the engine. When the belt 12 slackens, the rod 21 moves in the protruding direction from the cylinder 17 by pushing force of the return spring 31, thereby absorbing slackness of the belt 12.

At this time, since the plunger 22 moves in the same direction as the rod 21, the volume of the pressure chamber 25 becomes larger and thereby the pressure in the pressure chamber 25 decreases. When this pressure becomes lower than the pressure in the reservoir chamber 26, the check ball 29 moves downward and opens the path 28. Hydraulic oil in the reservoir chamber 26 thus flows through the path 28 into the pressure chamber 25, making the rod 21 and the plunger 22 move rapidly in protruding direction and thereby absorbing slackness of the belt 12.

On the other hand, when tension of the belt 12 increases, this tension of the belt 12 acts on the hydraulic auto-tensioner 16 through the tension pulley 13 and the pulley arm 15. At this time, tension of the belt 12 is applied to the rod 21 as pushing-in force and the pressure in the pressure chamber 25 becomes higher than the pressure in the reservoir chamber 26. This makes the check ball 29 move upward and thereby close the path 28.

When pushing-in force becomes larger than the load of the return spring 31, hydraulic oil in the pressure chamber 25 flows into the reservoir chamber 26 through the leak gap 24 formed between the sliding surfaces of the sleeve 18 and the plunger 22. At this time, the pushing-force is buffered by hydraulic damping caused by viscous resistance of hydraulic oil passing through the leak gap 24. The rod moves slowly to the position where the pushing-in force is equal to the load of the return spring 31, thereby keeping tension of the belt 12 constant.

On the other hand, when restarting the engine after idle stop, excessive belt tension momentarily acts on the hydraulic auto-tensioner 16 since the engine is driven by the motor generator. This may make the position of the tension pulley 13 change largely due to excessive retraction of the cylinder 17 and the rod 21, and consequently causes slackening of the entire belt 12. In this state, a slip may occur between the belt 12 and the tension pulley 13, thereby causing unstable start of the engine.

But with this hydraulic auto-tensioner 16, since the size of the leak gap 24 is determined such that the leak down time is 0.65 seconds/mm or over, any momentary excessive tension produced in the belt 12 when the engine is started is canceled by the viscous resistance of hydraulic oil that flows through the leak gap 24, which in turn prevents excessive retraction of the cylinder 17 and the rod 21. Thus, it is possible to prevent slip of the belt 12 when the engine is started, thereby stably starting the engine.

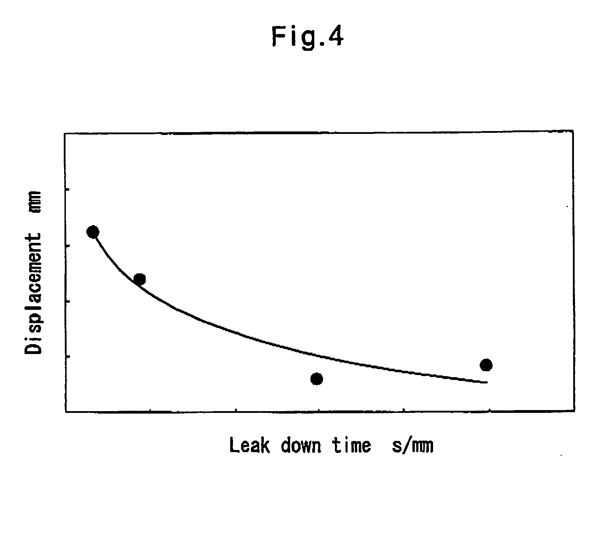

Fig. 4 shows the relationship between the leak down time and the displacement of the rod 21 when the engine is started. As shown, the longer the leak down time, the shorter the distance by which the rod 21 is pushed in when the engine is started. The engine can thus be started more stably and reliably.

With this hydraulic auto-tensioner 16, since the size of the leak gap 24 is determined such that the leak down time is 10 seconds/mm or less, it is possible to prevent extensive tensioning of the belt 12 due to pumping up of the rod 21. Pumping up of the rod 21 is a phenomenon in which the rod 21 protrudes rapidly due to the fact that the rod 21 is pushed in more slowly than when the rod 21 protrudes.

In the belt transmission device 1, displacement of the rod 21 in the pushed-in direction is kept small by setting the lower limit of the leak down time to be not shorter than 0.65 s/mm. Load of the return spring 31 thus does not have to be unnecessarily large. This prevents tension of the belt 12 from becoming excessively high when driving the engine.

While, in the above-mentioned embodiment, the leak gap 24 is formed between the plunger 22 and the inner diameter face 23 of the sleeve 18, the leak gap may be formed between the plunger 22 and the inner diameter face of the cylinder 17 without providing the sleeve 18.

In order to confirm that by setting the leak down time when a load of 980 N is applied to the plunger 22 at 0.65 seconds/mm or over, the engine of an idling stop vehicle can be stably started, six hydraulic auto-tensioner samples were prepared, i.e. samples with leak down times of 0.26 seconds/mm, 0.65 seconds/mm, 1.8 seconds/mm, 3.2 seconds/mm, 6.0 seconds/mm, 10 seconds/mm, respectively. Each sample was mounted in the belt transmission device of an idle stopping vehicle and the engine was started.

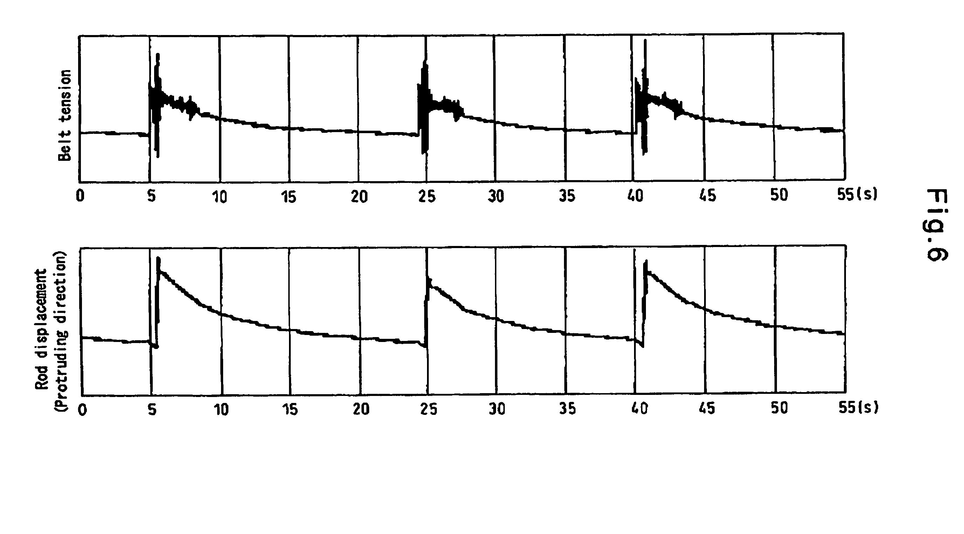

Fig. 6 shows the test data for the sample with the leak down time of 3.2 seconds/mm. In this test, data were taken continuously from the beginning of the test (0 seconds), and 5 seconds, 25 seconds and 40 seconds from the beginning of the test, the pulley 7 of the motor generator was driven, thereby attempting to start the engine by transmitting the rotation of the pulley 7 to the crankshaft 2 through the belt 12. The upper tier of Fig. 6 shows the tension of the belt 12, which is applied to the tensioner, and its lower tier shows the displacement of the rod 21 in the protruding direction.

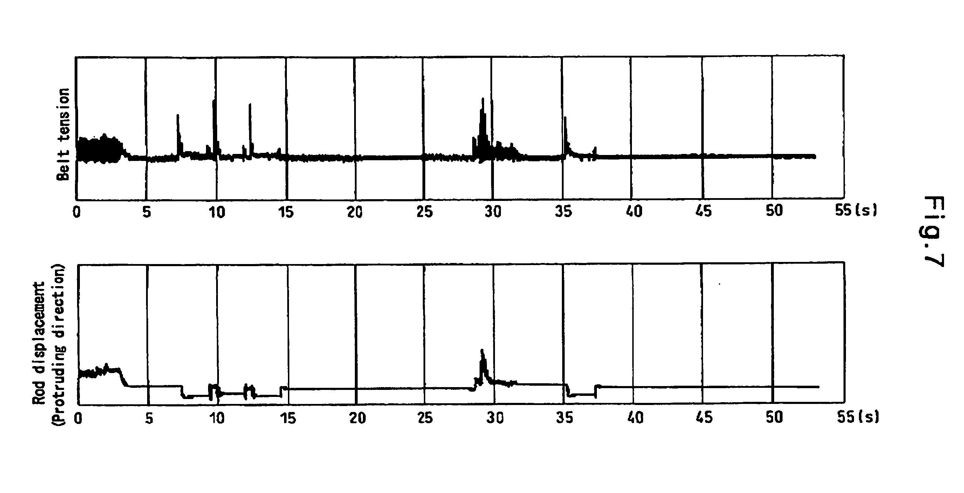

Fig. 7 shows the test data for the sample with the leak down time of 0.26 seconds/mm. In this test, 7.5 seconds and 35 seconds from the beginning of the test, the pulley 7 of the motor generator was driven, thereby attempting to start the engine. The upper tier of Fig. 7 shows the tension of the belt 12, which is applied to the tensioner, and its lower tier shows the displacement of the rod 21 in the protruding direction.

As shown in Fig. 6, for the sample with the leak down time of 3.2 seconds/mm, the rod 21 was slightly pushed in at 5 seconds, 25 seconds and 40 seconds from the beginning of the test, and the engine started immediately thereafter. Once the engine starts, the portion of the belt 12 with which the tension pulley 13 is in contact changes from the tight side to the slack side, so that this portion of the belt becomes momentarily slack. As a result, the rod 21 protrudes a large distance to remove slackness of the belt.

In the similar manner as with the test data of Fig. 6, for samples with leak down times of 0.65 seconds/mm, 1.8 seconds/mm, 6.0 seconds/mm, 10 seconds/mm, too, it was confirmed that the engine started stably.

But as shown in Fig. 7, for the sample with the leak down time of 0.26 seconds/mm, both at 7.5 seconds and 35 seconds from the beginning of the test, the rod 21 was pushed in a large distance. As a result, it was impossible to apply enough tension to the belt 12 and the engine could not be started.

## Claims

1. A hydraulic auto-tensioner used to adjust tension of a belt (12) for driving engine accesories in a idling stop vehicle of which an engine is adapted to be stopped when the vehicle stops, said auto-tensioner comprising
a cylinder (17) containing hydraulic oil therein,
a rod (21) inserted in said cylinder (17),
a plunger (22) provided at the bottom end of said rod (21),
said plunger (22) being slidably fit in the inner diameter face of said cylinder (17), defining a leak gap (24) therebetween,
said plunger (22) defining a pressure chamber (25) therebelow and a reservoir chamber (26) thereabove,
said plunger (22) being formed with a path (28) through which said pressure chamber (25) communicates with said reservoir chamber (26),
said path (28) being provided with a check valve that closes said path (28) when the pressure in said pressure chamber (25) exceeds the pressure in said reservoir chamber (26), and
a return spring (31) provided outside said cylinder (17) and biasing said cylinder (17) and said rod (21) in an extending direction, **characterized in that**
the size of the leak gap (24) is determined such that the leak down time when a load of 980 N is applied to the plunger (22) is 0.65 seconds/mm or over, and the upper limit of said leak down time is set to be not longer than 10 seconds/mm.

2. The hydraulic auto-tensioner according to claim 1, wherein a steel sleeve (18) is inserted in said cylinder and wherein said leak gap (24) is defined between the inner diameter face (23) of said sleeve (18) and said plunger (22).

3. A belt transmission device for idling stop vehicle wherein the engine is adapted to be stopped when the vehicle stops, comprising
a first pulley (3) mounted on an engine crankshaft (2),
a second pulley (7) mounted on a rotation shaft (6) of a motor generator,
a third pulley (5, 11) mounted on a rotational shaft of an engine accessory,
a belt (12) trained around said first, second and third pulleys,
a tension pulley (13) kept in contact with said belt (12) at its slack side when driving said engine,
a pivotable pulley arm (15) supporting said tension pulley (13), and
a hydraulic auto-tensioner that can adjust tension of said belt (12) by applying adjusting force to the pulley arm (15), wherein the engine is adapted to be restarted by said motor generator after idling stop,
**characterized in that** said hydraulic auto-tensioner is the hydraulic auto-tensioner (16) according to claim 1 or 2.

4. The belt transmission device according to claim 3, wherein the outer diameter of said return spring (31) of said hydraulic auto-tensioner (16) is within the axial width (W) of a boss (40) mounted on a pivot shaft (14) of said pulley arm (15).

5. The belt transmission device according to claim 4, wherein said boss (40) of said pulley arm (15) is positioned so that a side face (41) of the boss (40) on the side remote from the engine (38) is flush with a side edge (42) of said belt (12) on the side remote from the engine or located close to the engine (38) than is the side edge (42) of the belt (12).

## Patentansprüche

1. Hydraulischer Selbstspanner, verwendet, um eine Spannung eines Riemens (12) zum Antreiben von Maschinenzusatzgeräten in einem Leerlaufstopp des Fahrzeuges einzustellen, von dem eine Brennkraftmaschine angewendet wird, um gestoppt zu werden, wenn das Fahrzeug stoppt, wobei der Selbstspanner aufweist einen Zylinder (17), darin enthaltend Hydrauliköl,
eine Stange (21), eingesetzt in den Zylinder (17),
einen Kolben (22), angeordnet an dem unteren Ende der Stange (21),
wobei der Kolben (22) gleitbar in die Innendurchmesserfläche des Zylinders (17) eingesetzt ist, dabei einen Leckspalt (24) dazwischen bildend,
der Kolben (22) eine Druckkammer (25) darunter und oberhalb einer Reservoirkammer (26) darüber bildet,
der Kolben (22) mit einem Pfad (28) gebildet ist, durch den die Druckkammer (25) mit der Reservoirkammer (26) in Verbindung ist,
wobei der Pfad (28) mit einem Sicherheitsventil versehen ist, das den Pfad (28) schließt, wenn der Druck in der Druckkammer (25) den Druck in der Reservoirkammer (26) übersteigt, und
eine Rückholfeder (31), vorgesehen außerhalb des Zylinders (17), und die den Zylinder (17) vorspannt und die Stange (21) in einer Erstreckungsrichtung, **dadurch gekennzeichnet, dass**
die Größe des Leckspaltes (24) derart festgelegt ist, dass die Leckauslaufzeit, wenn eine Last von 980 N auf den Kolben (22) aufgebracht wird, 0,65 s oder mehr beträgt und die obere Grenze der Leckauslaufzeit festgelegt ist, nicht länger als 10 s/mm zu sein.

2. Hydraulischer Selbstspanner nach Anspruch 1, wobei eine Stahlhülse (18) in den Zylinder eingesetzt ist und wobei der Leckspalt (24) zwischen der Innendurchmesserfläche (23) der Hülse (18) und des Kolbens (22) gebildet ist.

3. Riemengetriebevorrichtung zum Leerlaufstopp eines Fahrzeuges, wobei die Brennkraftmaschine vorgesehen ist, wenn das Fahrzeug stoppt gestoppt zu werden, aufweisend
eine erste Riemenscheibe (3), montiert auf einer Motorkurbelwelle (2),
eine zweite Riemenscheibe (7), montiert auf einer Drehwelle (6) eines Motor- Generators,
eine dritte Riemenscheibe (5, 11), montiert auf einer Drehwelle eines Motorzusatzgerätes,
einen Riemen (12), um die erste, zweite und dritte Riemenscheibe geschlungen, eine Spannkraftriemenscheibe (13), in Kontakt gehalten mit dem Riemen an seiner durchhängenden Seite, wenn die Brennkraftmaschine antreibt,
einen schwenkbaren Riemenscheibenarm (15), der die Spannkraftriemenscheibe (13) lagert, und
ein hydraulischer Selbstspanner, der die Spannkraft des Riemens (12) durch Aufbringen einer Einstellkraft auf den Riemenscheibenarm (15) einstellen kann, wobei die Brennkraftmaschine vorgesehen ist, durch den Motor- generator nach dem Leerlaufstopp neu gestartet zu werden,
**dadurch gekennzeichnet, dass** der hydraulische Selbstspanner der hydraulische Selbstspanner (16) nach Anspruch 1 oder 2 ist.

4. Riemengetriebevorrichtung nach Anspruch 3, wobei der Außendurchmesser der Rückholfeder (31) des hydraulischen Selbstspanners (16) innerhalb der axialen Breite (W) einer Nabe (40), montiert auf einer Schwenkwelle (14) des Riemenscheibenarms (15), ist.

5. Riemengetriebevorrichtung nach Anspruch 4, wobei die Nabe (40) des Riemenscheibenarms (15) so positioniert ist, dass eine Seitenfläche (41) der Nabe (40) auf Seite fern von der Brennkraftmaschine bündig ist mit der Seitenkante (42) des Riemens (12) auf der Seite entfernt von der Brennkraftmaschine, oder näher zu der Brennkraftmaschine (38) als die Seitenkante (42) des Riemens (12) angeordnet ist.

## Revendications

1. Tendeur automatique hydraulique utilisé pour régler la tension d'une courroie (12) pour entraîner des accessoires de moteur dans un véhicule à arrêt au ralenti dont un moteur est apte à être arrêté quand le véhicule s'arrête, le tendeur automatique comprenant
un cylindre (17) qui contient de l'huile hydraulique, une tige (21) qui est introduite dans le cylindre (17),
un piston (22) qui est prévu à l'extrémité inférieure de la tige (21),
ledit piston (22) étant ajusté, coulissant, dans la face à diamètre intérieur du cylindre (17), définissant un espace d'écoulement (24) entre les deux,
ledit piston (22) définissant une chambre de pression (25), au-dessous, et une chambre réservoir (26), au-dessus,
ledit piston (22) étant pourvu d'un passage (28) par lequel la chambre de pression (25) communique avec la chambre réservoir (26),
ledit passage (28) étant pourvu d'un clapet antiretour qui le ferme quand la pression dans la chambre de pression (25) dépasse la pression dans la chambre réservoir (26), et
un ressort de rappel (31) qui est prévu à l'extérieur du cylindre (17) et qui contraint celui-ci et la tige (21) dans un sens d'extension, **caractérisé en ce que**
la taille de l'espace d'écoulement (24) est déterminée de telle sorte que le temps d'arrêt d'écoulement, quand une charge de 980 N est appliquée au piston (22), soit de 0,65 seconde/mm ou plus, et la limite supérieure de ce temps d'arrêt est fixée pour ne pas dépasser 10 secondes/mm.

2. Tendeur automatique hydraulique selon la revendication 1, étant précisé qu'un manchon en acier (18) est introduit dans le cylindre, et que l'espace d'écoulement (24) est défini entre la face de diamètre intérieur (23) du manchon (18) et le piston (22).

3. Dispositif de transmission à courroie pour un véhicule à arrêt au ralenti, étant précisé que le moteur est apte à être arrêté quand le véhicule s'arrête, comprenant
une première poulie (3) qui est montée sur un vilebrequin de moteur (2),
une deuxième poulie (7) qui est montée sur un arbre rotatif (6) d'un générateur de moteur,
une troisième poulie (5, 11) qui est montée sur un arbre rotatif d'un accessoire de moteur,
une courroie (12) qui passe sur les première, deuxième et troisième poulies,
une poulie de tension (13) qui est maintenue en contact avec la courroie (12) sur son côté lâche, lors de l'entraînement du moteur,
un bras de poulie pivotant (15) qui supporte la poulie de tension (13), et
un tendeur automatique hydraulique qui peut régler la tension de la courroie (12) en appliquant une force de réglage au bras de poulie (15), étant précisé que le moteur est apte à être redémarré par le générateur de moteur après l'arrêt au ralenti,
**caractérisé en ce que** le tendeur automatique hydraulique est constitué par le tendeur automatique hydraulique (16) selon la revendication 1 ou 2.

4. Dispositif de transmission de courroie selon la revendication 3, étant précisé que le diamètre extérieur du ressort de rappel (31) du tendeur automatique hydraulique (16) est situé à l'intérieur de la largeur axiale (W) d'un moyeu (40) monté sur un pivot (14) du bras de poulie (15).

5. Dispositif de transmission de courroie selon la revendication 4, étant précisé que le moyeu (40) du bras de poulie (15) est positionné de telle sorte qu'une face latérale (41) du moyeu (40) située sur le côté éloigné du moteur (38) se trouve dans l'alignement d'un bord latéral (42) de la courroie (12) situé du côté éloigné du moteur, ou plus près du moteur (38) que le côté latéral (42) de la courroie (12).
